# EUROPÄISCHE PATENTSCHRIFT

(11) **EP 0 678 405 B1**
(45) Veröffentlichungstag und Bekanntmachung des Hinweises auf die Patenterteilung: **22.03.2000**
(21) Anmeldenummer: 95105624.1
(22) Anmeldetag: 13.04.1995
(51) Int. Cl.: B60G 15/07, B62D 47/02, B62D 25/08, B60G 7/00, B60G 15/06, B60G 25/00, B62D 21/11

(54) **Omnibus-Steuerkopf mit einem Federbeinträger**
Bus front section comprising a carrier beam for resilient suspensions
Partie avant d'autobus comprenant un élément porteur pour suspensions élastiques

(30) Priorität: 18.04.1994 DE 4413411; 09.06.1994 DE 4420097
(43) Veröffentlichungstag der Anmeldung: 25.10.1995
(73) Patentinhaber: DaimlerChrysler AG, 70567 Stuttgart (DE)
(72) Erfinder: Mauz, Uwe, D-73730 Esslingen (DE); Verhouc, Helmut, D-73099 Adelberg (DE); Jaun, Heinz, D-71686 Remseck (DE); Hametner, Gerhard, D-72669 Unterensingen (DE)

(56) Entgegenhaltungen:
- EP-A- 0 295 661
- EP-A- 0 295 662
- EP-A- 0 563 526
- DE-A- 1 430 603
- DE-C- 837 210
- FR-A- 2 583 012
- GB-A- 815 324
- US-A- 2 047 336

## Beschreibung

Die Erfindung betrifft einen Omnibus modularen Aufbaus nach der im Oberbegriff von Anspruch 1 näher definierten Art.

Der sogenannte Steuerkopf eines Omnibusses beinhaltet im allgemeinen einen Fahrerplatz, eine Lenkeinheit inklusive Vorderachse, Fahrerbedienelemente, wie z.B. Armaturenbrett, Lenkung, Pedalerie, Fahrerschrank und dergleichen. Zur Aufnahme von Kräften und Gewichten, insbesondere der Lenkung und der Vorderachse mit den Radaufstandskräften und den Radführungskräften, ist es bekannt, Längsträger mit Ober- und Untergurten vorzusehen. Da diese Längsträger unter anderem auch die Hochkräfte aufnehmen müssen, ist es erforderlich, diese entsprechend aufwendig und stabil auszugestalten. Dies bedeutet darüber hinaus auch ein entsprechend hohes Gewicht.

Weiterhin werden die durch die Fahrbahn erzeugten Schwingungen bzw. Stöße über die meist sehr harten Radführungsgelenke der Radaufhängung direkt auf den Aufbau übertragen, was oft zur Komfortverschlechterung führt.

Ein Omnibus gemäß dem Oberbegriff des Anspruches 1 ist aus der DE-PS 837210 bekannt und weist eine Gerippestruktur aus Metall, insbesondere Leichtmetall auf, die modular aufgebaut ist, wobei einzelne Module zur Fahrgastzelle zusammengefügt sind, mit der ein Vorderteil zu verbinden ist, in dessen Bereich die Vorderachse mit den Rädern liegt und wobei die Seitenwandstruktur eine in Fahrzeuglängsrichtung angeordnete Strebe sowie einen zwischen dieser Strebe und der Dachstruktur angeordneten Holm umfaßt. Die Anschlußkräfte zwischen Vorderteil und Fahrgastzelle werden bei dieser Lösung im wesentlichen von der Seitenwandstruktur aufgenommen, da der Dachteil der Fahrgastzelle ein eigenständiges Modul bildet, das zur Erleichterung der Montage und Minderung der Anpassungsarbeit unter Verwendung von Paßstücken aus leicht anpassbarem Material, insbesondere Holz eingepaßt ist.

Bekannt ist es darüber hinaus für Nutzfahrzeuge (EP 2 583 012 A1), ein Vorderteil vorzusehen, bei dem die Vorderachse mit Rädern in Zuordnung zum Rahmen des Fahrzeuges angeordnet ist, über der Vorderachse das separate Fahrerhaus liegt und das Fahrerhaus gegenüber der Vorderachse federnd abgestützt und geführt ist.

Darüber hinaus ist es bei Fahrzeugen, die in Gitter- oder Zellenstruktur aufgebaut sind (US 2 047 336, Figur 37; DE-PS 1 430 603, Figur 3) bekannt, die vertikalen Radaufstandskräfte in die Dachstruktur einzuleiten, wobei die entsprechenden Kraftwege durch die Gitterstruktur oder zusätzliche Aussteifungen vorgegeben sind.

Der vorliegenden Erfindung liegt die Aufgabe zugrunde, einen Omnibus der eingangs erwähnten Art zu schaffen, bei dem bei einfachem Aufbau und geringem Gewicht die auftretenden Kräfte und Gewichte gut beherrschbar sind und der einen variablen Aufbau und eine zusätzliche Entkopplung der Radaufhängung zum Aufbau ermöglicht.

Erfindungsgemäß wird diese Aufgabe durch die im kennzeichnenden Teil von Anspruch 1 genannten Merkmale gelöst.

Durch den modularen Aufbau mit separatem Steuerkopf und Fahrgastzelle läßt sich ein Omnibus nach Art eines Baukastenprinzipes zusammensetzen, und es kann damit jeweils auf die gestellten Anforderungen bzw. Kundenwünsche abgestellt werden. Die auf den Steuerkopf wirkenden Radaufstandskräfte und Radführungskräfte werden über einen Federbeinträger aufgenommen, der gegen die Fahrgastzelle abgestützt ist, wobei die auftretenden Hochkräfte über einen Holm, der in der Seitenwand angeordnet ist, in die Dachstruktur eingeleitet werden und wobei über die in Fahrzeuglängsrichtung angebrachten Streben die Längs- bzw. Querkräfte der Radführung in die Seitenwand- bzw. Fußbodenstruktur der Fahrgastzelle eingeleitet werden.

In vorteilhafter Weise weist der erfindungsgemäße Steuerkopf als Fahrschemel eine Aluminiumstruktur auf und bildet eine vormontierte Einheit mit eingestellter Radaufhängung und Lenkung, so daß sich deutliche Gewichtsreduzierungen und kurze Montagezeiten ergeben.

Die Verbindung des Steuerkopfes mit der Fahrgastzelle kann über definierte Lagerstellen, die geräusch- bzw. schwingungsentkoppelt ausgeführt werden können, erfolgen. Die Lagerstellen befinden sich zum einen an den Streben, die als Fenstergurte dienen und an denen auch die ins Dach führenden Seitenwandholme befestigt sind, und zum anderen an einer sogenannten Schottwand im Bereich der Fußbodenstruktur.

In einer sehr vorteilhaften Weiterbildung der Erfindung kann der Federbeinträger in seinem mittleren Bereich nach unten abgesetzt sein. Diese Abkröpfung bzw. der dadurch entstehende U-förmige Verlauf des Federbeinträgers - in einer Ansicht von vorne oder von hinten gesehen - bringt nicht nur aus räumlichen Gründen Vorteile, sondern darüber hinaus auch einen abnehmenden Biegemomentenverlauf im mittleren Bereich des Federbeinträgers.

Grundsätzlich ist der Federbeinträger als reiner Biegeträger ausgebildet. Neben den vertikalen Radaufstandskräften sind gleichzeitig noch nach innen gerichtete Querkräfte vorhanden, und zwar aufgrund des seitlichen Versatzes zwischen der Radachse und der Spreizachse. Diese nach innen gerichteten Querkräfte sind im Regelfall gegensinnig zueinander. Dies hat einen positiven Effekt auf den Biegemomentenverlauf bei einem nach unten abgesetzten Federbeinträger und zwar derart, daß das Biegemoment auf dem nach unten gerichteten Abschnitt des Federbeinträgers und dem bis zur Wagenmitte horizontalen Mittelteil abnimmt. Im Ergebnis bedeutet dies, daß der Federbeinträger ausgehend von der Federbeinlagerung bis hin zur Fahrzeugmitte kontinuierlich schwächer ausgebildet werden kann bzw. entsprechend stabiler ist.

Die gezielte Einleitung der Hochkräfte über die Holme der Seitenwände in die Dachstruktur bzw. die Einleitung der Längs- und Querkräfte über die Streben im oberen Bereich des Federbeinträgers in die Seitenwandstruktur und über dreieckförmig angeordnete Streben im unteren Teil des Federbeinträgers in die Fußbodenstruktur bringt als weiteren Vorteil, daß im mittleren Bereich des Steuerkopfes keine weitere Unterbaustruktur notwendig ist. Es ist lediglich eine am Federbeinträger befestigte Halterung für die Lenkung notwendig.

Durch die vorteilhafte Ausbildung des Federbeinträgers können in dessen mittlerem Bereich die beiden Querlenker der Räder direkt über entsprechende Querlenkerhalterungen befestigt werden. Die großen Querkräfte der Radführung können somit direkt über die dreieckförmig angeordneten, den Federbeinträger abstützenden Streben in die Fußbodenstruktur der Fahrzeugzelle eingeleitet werden.

Vorteilhafte Weiterbildungen und Ausgestaltungen der Erfindung ergeben sich aus dem nachfolgend anhand der Zeichnung prinzipmäßig beschriebenen Ausführungsbeispiel.

Es zeigt:
- Figur 1: eine perspektivische Darstellung des erfindungsgemäßen Steuerkopfes in Zuordnung zur Fahrgastzelle;
- Figur 2: eine Darstellung eines Federbeinträgers mit der Federbeinradaufhängung in einer Ansicht von hinten;
- Figur 3: eine Darstellung eines Federbeinträgers in einer Ansicht von vorne;
- Figur 4: eine perspektivische Darstellung eines Federbeinträgers;
- Figur 5: eine perspektivische Darstellung des Steuerkopfes in einer rückwärtigen Ansicht.

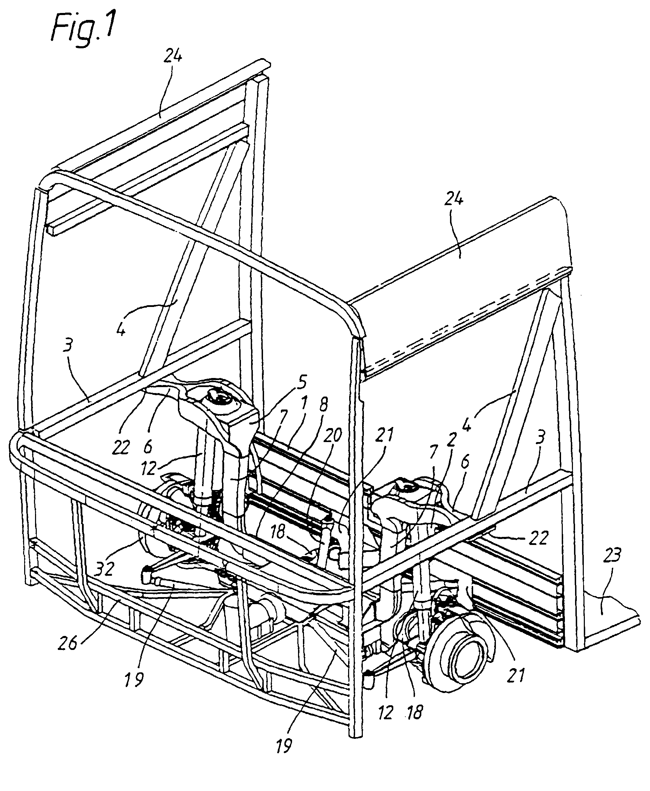

Gemäß Figur 1 wird der Steuerkopf durch Lagerstellen 21, 22 einerseits über eine Schottwand 1 direkt mit einer Fußbodenstruktur 23 der Fahrzeugzelle und andererseits mit einer einen Fensteruntergurt bildenden Strebe 3 und einem Holm 4 in der Seitenwand mit der nur ausschnittsweise dargestellten Fahrzeugzelle verbunden.

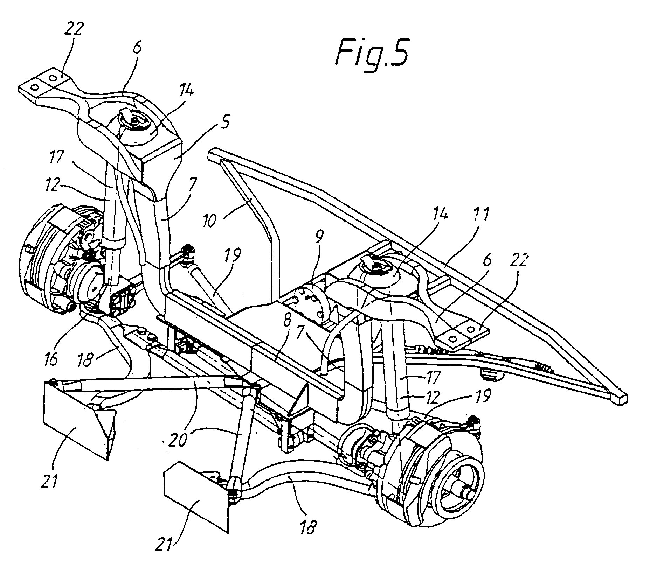

Ein Vorbaugerippe 26 kann, an der Dachstruktur hängend und über die Fensteruntergurte bildende Streben 3 in Längsrichtung gehalten, zur Querstabilisierung mit dem Federbeinträger 5 (Figur 5) verbunden werden.

Die Schottwand 1 weist einen Ausschnitt 2 im mittleren Bereich als Zugang zu einem Fahrerplatz auf. Vor der Schottwand 1 befindet sind an beiden Fahrzeugseiten jeweils eine Strebe 3 als Fensteruntergurt, auf den jeweils der Holm 4 aufgesetzt ist.

Strebe 3 und Holm 4 sind jeweils auf die Enden des Federbeinträgers 5 aufgesetzt, der sich quer durch den Steuerkopf erstreckt. Wie ersichtlich, ist der Federbeinträger 5 in seinem Verlauf mit einer Abkröpfung versehen bzw. besitzt eine U-Form mit seitlichen Ansätzen 6, auf denen jeweils die Fensteruntergurte bildenden Streben 3 und die Holme 4 aufliegen. Von den horizontalen Ansätzen 6 aus erstrecken sich senkrecht nach unten Verbindungsträger 7, die in ein entsprechend tiefergesetztes horizontales Mittelteil 8 münden, das die beiden Verbindungsträger 7 miteinander verbindet.

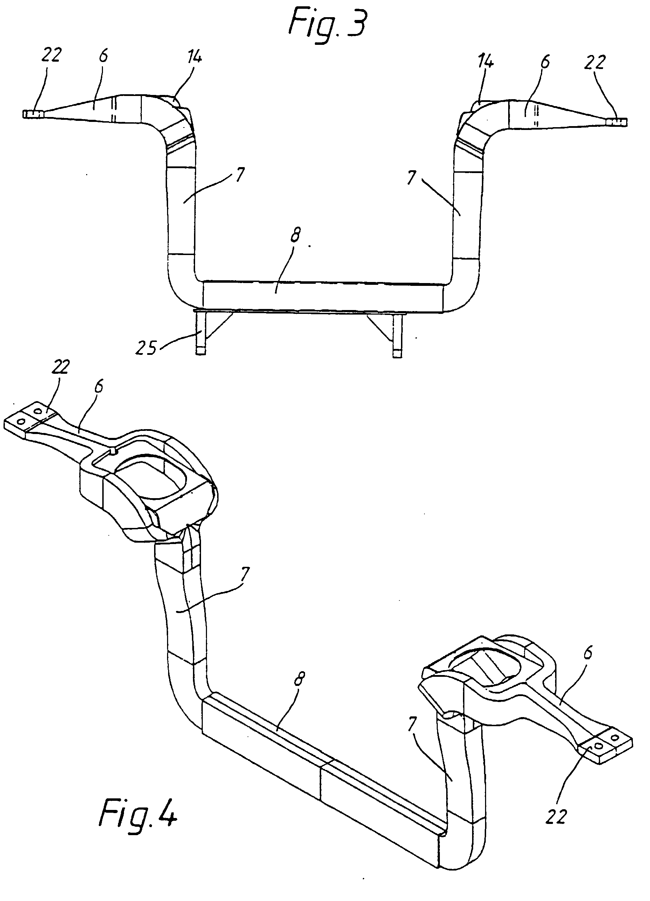

Wie aus Figur 1 bis 5 ersichtlich, ist auf diese Weise ein großer Freiraum zur Aufnahme des in Fahrzeugmitte angeordneten Fahrerplatzes geschaffen.

In Fahrzeuglängsrichtung sich erstreckende dreieckförmig angeordnete Streben 20 sind dabei an einem Ende an der Schottwand 1 befestigt, während sie am vorderen Ende mit dem Federbeinträger 5 formschlüssig verbunden sind.

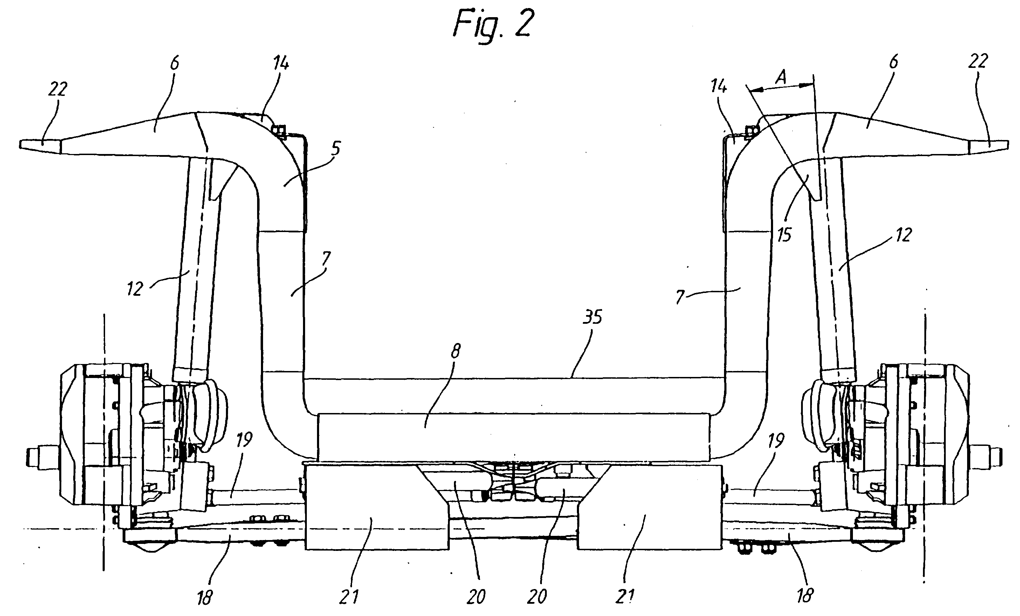

Im Bereich der horizontal verlaufenden Ansätze 6 werden auch die über die Federbeinen 12 bekannter Bauart eingeleiteten Radaufstandkräfte der nicht gezeigten Rädern aufgenommen. Lagerschalen bzw. Federbeinlager 14 der Federbeine 12 sind jeweils über einen Halter 15 nach innen versetzt mit dem Ansatz 6 des Federbeinträgers 5 verbunden. Aus den Figuren 2 und 5, in denen auch ein Querlenker 18 und eine Spurstange 19 ausschnittsweise dargestellt sind, ist diese Verbindung deutlicher erkennbar.

Aufgrund des Versatzes des Federbeines 12 zum Radaufstandspunkt wirkt auf das Federbein 12 ein Biegemoment mit einem Hebelarm zum Radaufstandspunkt. Dieses Biegemoment führt zu einer Belastung des Federbeins 12 und Querkräften im Federbein 12, die dessen Ansprechverhalten negativ beeinflussen (Verkanten des Federbeins, erhöhte Reibung).

Durch den nach innen gelegten Versatz bzw. die nach innen gelegte Verbindung der Federbeine 12 um das Maß 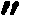 A" (siehe Figur 2) in deren Abstützung an dem Federbeinträger 5 wird es möglich, diesen Querkräften entsprechende Gegenkräfte zu überlagern.

Dadurch, daß der Zylinder des Federbeines 12 nicht direkt in seiner Wirkungslinie gelagert ist, sondern um ein entsprechendes Maß seitlich nach innen versetzt, wird ein Gegenmoment erzeugt. Dieses Gegenmoment steht dem vorstehend beschriebenen Biegemoment entgegen.

Der Halter 15 wird - wie ersichtlich - außen am Zylindergehäuse 17 des Federbeines 12 mit seinem vertikalen Schenkel angebracht, während der horizontale Schenkel des Winkels mit dem horizontalen Ansatz 6 des Federträgers 5 über ein Federbeinlager 14 verbunden wird. Im allgemeinen wird das Federbeinlager als Gummilager ausgebildet.

Dieses Federbeinlager 14 ist derart ausgebildet, daß es in seiner Torsionsrichtung (Drehung um die Hochachse) eine viel größere Steifigkeit aufweist als in kardanischer Richtung (Drehung um die horizontalen Achsen).

Der als reiner Biegeträger ausgebildete Federbeinträger 5 ist so ausgestaltet, daß er an seinen beiden Enden, d.h. an den Enden der horizontalen Ansätze 6, mit den darauf sich abstützenden Holmen 4 ein Loslager bildet. Im Bereich der Verbindung der Verbindungsträger 7 mit dem horizontalen Mittelteil 8 ist ebenfalls ein Loslager in vertikaler Richtung vorhanden. Dies bedeutet, der Federbeinträger ist sehr stabil und verwindungsarm, und zwar ohne besondere zusätzliche Verstrebungen.

Die dargestellten Verstrebungen, durch Fensteruntergurte gebildete Streben 3 und dreieckförmig angeordnete Streben 20 im Bereich des Mittelteils 8, sind dazu vorgesehen, die auftretenden Radführungskräfte (Längs- und Querkräfte) aufzunehmen und gezielt in die Fahrzeugzelle einzuleiten.

Durch die vorteilhafte Einbindung des Federbeinträgers 5 in dem Steuerkopf kann der sich im Mittelteil befindliche Fahrerboden 35, der den Fahrersitz, Pedalerie, Lenksäule und Radkastenabdeckungen aufnimmt, freitragend, und damit von der Achse geräusch- und schwingungsentkoppelt über dem Federbeinträger 5 angeordnet werden.

Grundsätzlich ist die Verwendung der Federbeinträger 5 nicht nur auf die dargestellte Einzelradaufhängung, z.B. ein McPherson-Federbein beschränkt, sondern gegebenenfalls auch für eine starre Achse geeignet. Die Einleitung der Hochkräfte, d.h. der Kräfte in Z-Richtung über die Holme 4 in die Dachkonstruktion erfolgt in links und rechts liegende Kanäle 24, die als Tragprofile ausgebildet sind. Auf diese Weise wird eine Rahmenstruktur nach dem Prinzip einer Hängebrücke geschaffen.

Wenn in dem Steuerkopf die Radkästen integriert sind, kann die Fahrgastzelle als Röhre ausgebildet und damit radkastenfrei sein. Auf diese Weise läßt sie sich beliebig den Kundenwünschen anpassen.

## Patentansprüche

1. Omnibus modularen Aufbaus mit einem eine Vorderachse mit Rädern umfassenden separaten Vorderteil und einer Fahrgastzelle, die eine Fußbodenstruktur (23) und eine Dachstruktur beinhaltet, wobei in einer Seitenwandstruktur eine in Fahrzeuglängsrichtung angeordnete Strebe (3) und ein zwischen Strebe (3) und Dachstruktur angeordneter Holm (4) vorgesehen ist,
**dadurch gekennzeichnet,**
daß das Vorderteil als Steuerkopf mit Fahrerplatz, Lenkeinheit und Fahrerbedienelementen ausgebildet ist, der einen Federbeinträger (5) aufweist, auf dem sich die Radaufstandskräfte und die Radführungskräfte wenigstens zum größten Teil abstützen und der einerseits mit der Fußbodenstruktur (23) der Fahrgastzelle und andererseits mit der in Fahrzeuglängsrichtung angeordneten Strebe (3) und dem Holm (4) in der Seitenwandstruktur mit der Fahrgastzelle verbunden ist, wobei die auftretenden Hochkräfte über den Holm (4) in die Dachstruktur eingeleitet werden und die Längs- und Querkräfte über die in Fahrzeuglängsrichtung angeordnete Strebe (3) im oberem Bereich des Federbeinträgers (5) in die Seitenwandstruktur und über dreieckförmig angeordnete Streben (20) im unteren Teil des Federbeinträgers (5) in die Fußbodenstruktur (23) eingeleitet werden.

2. Omnibus nach Anspruch 1,
**dadurch gekennzeichnet,**
daß die dreiecksförmig angeordneten Streben (20) über Lagerstellen (21) mit einer Schottwand (1) der Fahrgastzelle verbindbar sind.

3. Omnibus nach Anspruch 1 oder 2,
**dadurch gekennzeichnet,**
daß der Federbeinträger (5) in seinem mittleren Bereich nach unten abgesetzt ist.

4. Omnibus nach einem der Ansprüche 1 bis 3,
**dadurch gekennzeichnet,**
daß die Holme (4) als Vertikal- und/oder Diagonalholme ausgebildet sind.

5. Omnibus nach einem der Ansprüche 1 bis 4,
**dadurch gekennzeichnet,**
daß an dem Federbeinträger (5) direkt oder über Zwischenträger (Halter 15) Federbeine (12) der Räder (13) abgestützt sind.

6. Omnibus nach Anspruch 5,
**dadurch gekennzeichnet,**
daß die Federbeinlager (14) der Federbeine (12) in ihrer Torsionsrichtung (Drehung um die Hochachse) eine größere Steifigkeit aufweisen als in kardanischer Richtung (Drehung um die horizontalen Achsen).

7. Omnibus nach Anspruch 6,
**dadurch gekennzeichnet,** daß die Federbeine (12) über nach innen versetzte
Federbeinlager (14) am Federbeinträger (5) abgestützt sind.

8. Omnibus nach Anspruch 7,
**dadurch gekennzeichnet,**
daß die Federbeine (12) jeweils über einen Halter (15) mit den Federbeinlagern (14) verbunden sind.

9. Omnibus nach einem der Ansprüche 1 bis 8,
**dadurch gekennzeichnet,**
daß der Federbeinträger (5) zur Fahrgastzelle (Fußbodenstruktur 23) geräusch- und schwingungsentkoppelt ist.

10. Omnibus nach einem der Ansprüche 1 bis 9,
**dadurch gekennzeichnet,**
daß die Dachkonstruktur der Fahrgastzelle, in die die Hochkräfte des Steuerkopfes einleitbar sind, auf beiden Seiten Kanäle (24) aufweist, die als Tragprofile ausgebildet sind.

## Claims

1. An omnibus of a modular structure having a separate front part comprising a front axle with wheels and a passenger compartment, which contains a floor structure (23) and a roof structure, a cross-beam (3) arranged in a longitudinal direction of the vehicle and a spar (4) arranged between cross-beam (3) and roof structure being provided in a side wall structure,
**characterised in that**
the front part is designed as a control head with a driver's seat, steering unit and driver operating elements, having a strut support (5) on which at least the greater part of the wheel reaction forces and the wheel guiding forces are supported and which is joined to the floor structure (23) of the passenger compartment on the one hand and to the cross-beam (3) arranged in a longitudinal direction of the vehicle and the spar (4) in the side wall structure on the other, wherein any vertical forces which occur are transmitted to the roof structure via the spar (4) and the longitudinal and transverse forces are transmitted into the side wall structure via the cross-beam (3) arranged in a longitudinal direction of the vehicle at the upper region of the strut support (5) and into the floor structure (23) via struts (20) arranged in a triangular layout at the bottom part of the strut support (5).

2. An omnibus as claimed in claim 1,
**characterised in that**
the triangularly arranged struts (20) can be connected to a bulkhead wall (1) of the passenger compartment by means of bearing points (21).

3. An omnibus as claimed in claim 1 or 2,
**characterised in that**
the strut support (5) is of a dropped-down design in its middle region.

4. An omnibus as claimed in one of claims 1 to 3,
**characterised in that**
the spar (4) is provided as a vertical and/or diagonal spar.

5. An omnibus as claimed in one of claims 1 to 4,
**characterised in that**
struts (12) of the wheels (13) are supported on the strut support (5) either directly or by means of intermediate bearings (clamps 15).

6. An omnibus as claimed in claim 5,
**characterised in that**
the strut bearings (14) of the struts (12) are more rigid in the torsional direction thereof (rotation about the vertical axis) than in the cardanic direction (rotation about the horizontal axes).

7. An omnibus as claimed in claim 6,
**characterised in that**
the struts (12) are supported on the strut support (5) by means of strut bearings (14) offset towards the interior.

8. An omnibus as claimed in claim 7,
**characterised in that**
the struts (12) are joined to the strut bearings (14) by means of a respective clamp (15).

9. An omnibus as claimed in one of claims 1 to 8,
**characterised in that**
the strut support (5) is decoupled from the passenger compartment (floor structure 23) in terms of noise and vibrations.

10. Omnibus as claimed in one of claims 1 to 9,
**characterised in that**
the roof structure of the passenger compartment into which the vertical forces of the control head can be transmitted has ducts (24) on both sides which are provided in the form of bearing sections.

## Revendications

1. Autobus à structure modulaire comportant une partie avant séparée, qui comprend un essieu avant pourvu de roues, et une cellule formant habitacle, qui contient une structure de plancher (23) et une structure de toit, et dans lequel une entretoise (3) disposée dans la direction longitudinale du véhicule et une jambe de force (4) disposée entre l'entretoise (3) et la structure de toit sont prévues dans une structure de paroi latérale,
caractérisé en ce
que la partie avant est agencée sous la forme d'une tête de commande qui comporte une place pour le conducteur, une unité de direction et des éléments de commande pour le conducteur et qui comprend un élément de support (5) de la jambe de suspension, sur lequel prennent appui, au moins en majeure partie, les forces d'appui des roues et les forces de guidage des roues et qui est relié d'une part à la structure de plancher (23) de la cellule formant habitacle et d'autre part, par l'entretoise (3) disposée dans la direction longitudinale du véhicule et par la jambe de force (4) dans la structure de paroi latérale, à la cellule formant habitacle, les forces verticales, qui apparaissent étant transférées par l'intermédiaire de la jambe de force (4) à la structure de toit, tandis que les forces longitudinales et transversales sont appliquées, par l'intermédiaire de l'entretoise (3) disposée dans la direction longitudinale du véhicule, dans la partie supérieure du support (5) de la jambe de suspension, à la structure de la paroi latérale et, par l'intermédiaire d'entretoises (20) agencées avec une forme triangulaire, dans la partie inférieure du support (5) de la jambe de force, à la structure de plancher (23).

2. Autobus selon la revendication 1, caractérisé en ce que les entretoises (20) agencées sous forme triangulaire peuvent être reliées par l'intermédiaire de points de support (21) à une paroi de séparation (1) de la cellule formant habitacle.

3. Autobus selon la revendication 2, caractérisé en ce que le support (5) de la jambe de force présente une partie étagée décalée vers le bas au niveau de sa partie médiane.

4. Autobus selon l'une des revendications 1 à 3, caractérisé en ce que les jambes de force (4) sont agencées sous la tonne de jambes de force verticales et/ou diagonales.

5. Autobus selon l'une des revendications 1 à 4, caractérisé en ce que des jambes de suspension (12) des roues (13) sont supportées au niveau du support (5) des jambes de force directement par l'intermédiaire de supports intercalaires (dispositifs de retenue 15).

6. Autobus selon la revendication 5, caractérisé en ce que les supports (14) des jambes de suspension (12) comportent, dans leur direction de torsion (rotation autour de l'axe vertical), une rigidité plus grande que dans une direction de transmission à la cardan (rotation autour des essieux horizontaux).

7. Autobus selon la revendication 6, caractérisé en ce que les jambes de suspension (12) sont supportées par le support (5) des jambes de force par l'intermédiaire de paliers (14) décalés vers l'intérieur.

8. Autobus selon la revendication 7, caractérisé en ce que les jambes de suspension (12) sont reliées aux paliers (14) des jambes de suspension par l'intermédiaire de dispositifs de retenue respectifs (15).

9. Autobus selon l'une des revendications 1 à 8, caractérisé en ce que le support (5) des jambes de force est découplé, du point de vue de la transmission des bruits et des vibrations, par rapport à la cellule formant habitacle (structure de plancher 23).

10. Autobus selon l'une des revendications 1 à 9, caractérisé an ce que la cellule formant habitacle, dans laquelle les forces verticales de la tête de commande peuvent être appliquées, possède, des deux côtés, des canaux (24) qui sont agencés sous la forme de profilés de support.
